Europäisches Patentamt

European Patent Office

Office européen des brevets

(11) Publication number: **0 341 606**
**A1**

# EUROPEAN PATENT APPLICATION

(21) Application number: **89108152.3**

(51) Int. Cl.⁴: **A47J 37/12**

(22) Date of filing: **05.05.89**

(30) Priority: **11.05.88 IT 4572688**

(43) Date of publication of application:
**15.11.89 Bulletin 89/46**

(84) Designated Contracting States:
**CH DE ES FR GB IT LI SE**

(71) Applicant: **ZANUSSI GRANDI IMPIANTI S.p.A.**
**Viale Treviso 15**
**I-33170 Pordenone(IT)**

(72) Inventor: **Comar, Claudio**
**via Corva 33**
**I-33088 Tiezzo di Azzano Decimo(IT)**

(74) Representative: **Kirschner, Klaus Dieter et al**
**Patentanwälte Herrmann-Trentepohl,**
**Kirschner, Grosse, Bockhorni & Partner**
**Forstenrieder Allee 59**
**D-8000 München 71(DE)**

(54) **A control device for fryers.**

(57) A control device for fryers provided with a vessel (6) for holding the frying oil as well as a thermostat (12) and a temperature limiter (13) for thermostatically regulating the oil heating temperature. The control device comprises a floating element (15) that is housed in a chamber (16) protruding laterally of the vessel (6) and actuates the contacts (21, 22) of a microswitch (20) connected to the thermostat (12) and the temperature limiter (13) and adapted to permit said components to be supplied or not supplied depending on the vertical movement of the floating element (15) in the chamber (16) due to the variations in the oil level in the vessel (6). Thus, when said level is below or equal to a predetermined minimum level, the functioning of the apparatus is stopped, thereby preventing any overheating of the oil or the walls of the vessel.

Section A-A

FIG. 2

# A control device for fryers

The present invention relates to a control device for food fryers that is adapted to prevent both the oil contained in the apparatus vessel and the vessel itself from overheating if the level of the oil drops below a predetermined limit during the operation of the apparatus.

Similar fryers or apparatus for frying food are known that substantially comprise a vessel for holding the oil and a heat exchanger generally disposed in contact with the outer walls of the vessel for effecting the heating of the oil, whereby said exchanger can consist of pipes transporting the burned gas generated by a burner, or of a series of electric heating elements. Said fryers further comprise at least one thermostat and one temperature limiter, both disposed within the vessel in positions below the level of the oil and respectively adapted to effect a regulation of the oil temperature, maintaining it within predetermined limits, and to interrupt the supply to the source of heat (burner or heating elements) of the apparatus if the temperature exceeds said predetermined limits, e.g. in the case of accidental breakage of said thermostat. This apparatus also comprises at least one basket for holding the food, to be moved vertically from a raised position with respect to the oil bath to a lowered position in which the basket and the food are immersed in the oil during the frying operation.

In the apparatus in question, the oil is introduced beforehand into the vessel up to a level so as to ensure the frying of a definite amount of food, the thermostat and the temperature limiter being kept completely immersed in the oil so as to permit the regulation of its heating temperature, said oil finally being drained from the vessel and replaced by more oil after diverse frying operations.

Although their functioning is satisfactory, the fryers in question nevertheless show the disadvantage of requiring constant supervision of the oil level within the vessel to prevent the level from falling below a pre determined limit below which said thermostat and temperature limiter are no longer covered by oil.

In such a state, it would no longer be possible to effect the thermostatic regulation of the oil heating temperature, resulting in overheating of the oil and the metal walls of the vessel and in the danger of fire and of damage to the apparatus.

To avoid these dangers, the present invention provides for the use of a control device for fryers that acts on said thermostat and said temperature limiter in accordance with the level of the oil contained in the vessel of this apparatus.

In this way, said control device allows for certain detection of the oil level and, as soon as this level drops below the predetermined limit, said device automatically ensures the switch-off of the thermostat and the temperature limiter, maintaining them in this state until more oil is added to the vessel in a sufficient amount so as to restore the original oil level.

This device therefore rules out any possibility of damage to the apparatus.

This and other objectives are obtained according to the invention by means of a control device for fryers that substantially comprise a vessel for holding the oil for frying the food, at least one heat exchanger disposed in contact with the walls of said vessel and consisting of pipes transporting the burned gas generated by a burner, or of an electric heating element, at least one thermostat and one temperature limiter, both disposed within the vessel in positions below the oil level and respectively adapted to select and to regulate within predetermined limits the oil heating temperature by switching on and off the supply of gas to said burner or of electric current to said heating element.

The present control device is characterized in that it comprises switch means connected electrically to said thermostat and said temperature limiter and adapted to be actuated in accordance with the level of the oil in the vessel in such a way as to effect the switch-off of said thermostat and said temperature limiter when the latter are no longer covered by oil, the oil level having dropped to or below a predetermined minimum limit.

The features of the invention will become more apparent from the following description, which serves solely as a nonrestrictive example, and with reference to the adjoined drawings, in which

Fig. 1 shows schematically a longitudinal view of a fryer containing the inventive control device,

Fig. 2 shows schematically a cross-sectional view along line A-A of the fryer of Fig. 1,

Figs. 3 and 4 show the electrical circuit diagram of the present control device, in two different embodiments.

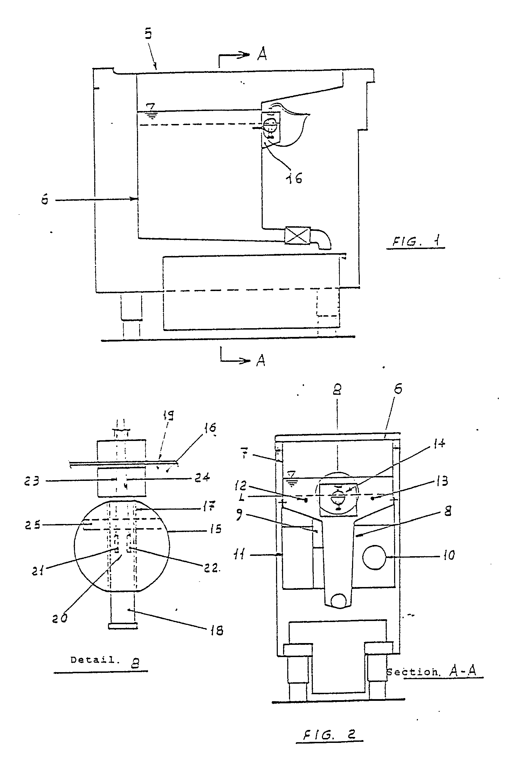

Referring to Figs. 1 and 2, one can see a fryer 5 containing the present control device and substantially comprising a vessel 6 for holding the oil for frying the food, formed preferably with a box-shaped upper portion 7 and a trapezoidal lower portion 8 tapering toward the bottom zone of the vessel, and a heat exchanger consisting of a series of pipes 9 disposed in contact with the outer walls of vessel 6 and transporting the burned gas generated by a burner 10 disposed in a position lateral to the vessel and enclosed in a corresponding combustion chamber 11, said burner being supplied with gas by a suitable supply system (not shown) with the help of regulating means known per se (not shown either).

Alternatively, the heat exchanger can also consist of a series of electric heating elements (not shown), in which case burner 10 is dispensed with, if the fryer is prepared solely for connection to electric mains voltage.

The present fryer also comprises at least one thermostat 12 and one temperature limiter 13 of the conventional type, both disposed within vessel 6 in positions such as to be situated below the oil level, and respectively adapted to select the oil heating temperature and to regulate this temperature within predetermined limits by means of a series of connections and disconnections of the supply of gas to burner 10 (or of electric current to the heating element).

To prevent overheating of the oil in vessel 6 and of the metal walls of the vessel, with the resulting danger of fire and of damage to the fryer should the oil level drop below a predetermined minimum limit during the functioning of the apparatus, in which state thermostat 12 and temperature limiter 13 would no longer be in a position to regulate thermostatically the oil heating temperature, the fryer in question is also provided with a control device 14 substantially comprising a preferably spherical floating element 15 housed in an adequately dimensioned chamber 16 protruding laterally of vessel 6 and communicating therewith, said chamber being situated in correspondence with the fill-up level of the oil in vessel 6.

This floating element is specifically provided with a through hole 17 having inserted thereinto a vertical elongate rod 18 whose upper end is fixed against the corresponding upper wall 19 of chamber 16 in such a way that said floating element can slide vertically along rod 18 in accordance with the level of the oil contained in vessel 6.

The present control device also comprises a microswitch 20 with reed contacts 21 and 22 situated within said rod 18 and connected via respective lines 23 and 24 to the electric mains supply.

The device also comprises a toroidal magnet 25 situated within floating element 15 and connected rigidly thereto, said magnet being movable vertically from an upper position, when vessel 6 is filled with the maximum oil level, in which the magnet influences reed contacts 21 and 22 moving them closed, to a lower position, when the oil level in the vessel has dropped to or below the aforesaid predetermined minimum limit, in which magnet 25 no longer influences reed contacts 21 and 22 which are consequently moved open.

Thus, when floating element 15 is moved along rod 18 into its upper position, due to the existing fill-up level of the oil within vessel 6, in which state thermostat 12 and temperature limiter 13 are covered with oil, magnet 25 is also moved into its upper position, thereby effecting the closing of microswitch 20 and the electric supply of thermostat 12 and temperature limiter 13. In this situation, these components ensure the thermostatic regulation of the oil heating temperature. Conversely, as soon as the oil level in vessel 6 has reached said predetermined minimum limit, or has dropped slightly below said limit, in which state thermostat 12 and temperature limiter 13 are no longer covered by oil, thereby running the risk of incurring the above-described disadvantages, floating element 15 is moved along rod 18 into its lower position, in which magnet 25 is also moved, thereby effecting the opening of contacts 21 and 22 of microswitch 20.

In this state, the supply to thermostat 12 and temperature limiter 13 is thus switched off, and the supply of gas to burner 10 is also interrupted (or of electric current to the heating element, if the fryer is heated electrically), thereby ruling out any possibility of the oil and the walls of vessel 6 overheating and guaranteeing absolute safety of the fryer at any oil level in the vessel.

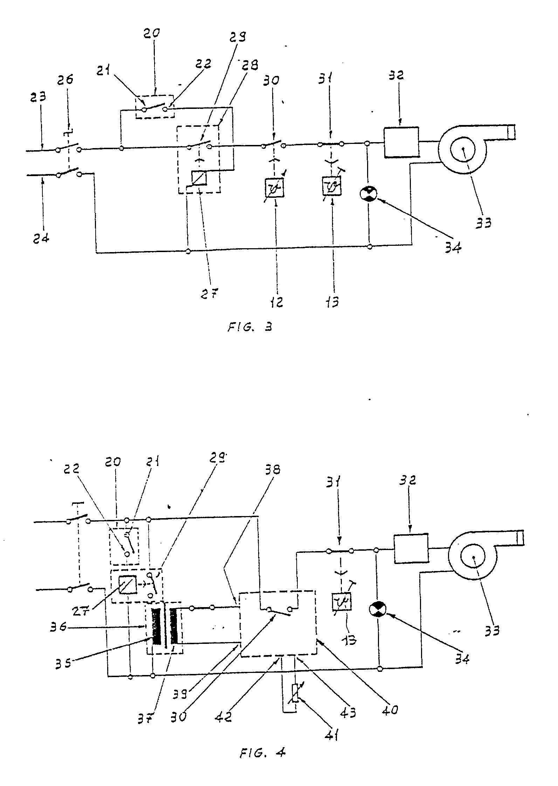

Referring now to Fig. 3, one can see the electrical circuit diagram of the present control device in a first embodiment.

This circuit substantially comprises electric contacts 21 and 22 of microswitch 20 associated with floating element 15 and supplied by main lines 23 and 24 of the electric network via main switch 26 of the fryer, said contacts being connected in series with coil 27 of a relay 28 acting on electric contact 29 connected to line 23 and disposed in series with the respective electric contacts 30 and 31 of thermostat 12 and temperature limiter 13.

The circuit also comprises regulating means for the inflow of the gas as well as the means for lighting the burner which, for the sake of simplicity, are represented schematically by terminal block 32, disposed behind contact 31 of the temperature limiter and connected in parallel both with motor fan 33 of the apparatus and with a pilot lamp 34 for signaling the action of thermostat 12.

As can be seen from this circuit, when the fryer vessel is filled with oil to the correct level, floating element 15 effects the closing of contacts 21 and 22, and the resulting energizing of coil 27 of relay 28 effects the closing of contact 29, thereby preparing the thermostatic regulation of the oil heating temperature via thermostat 12, temperature limiter 13 and terminal block 32.

In this situation, pilot lamp 34 remains switched on as long as the burner remains in operation, while it is switched off as soon as the burner supply is disconnected by the opening of thermostat 12 and or temperature limiter 13.

However, as soon as the oil level has dropped to the aforesaid minimum level or below said minimum level, floating element 15 effects the opening of contacts 21 and 22, and the resulting deenergizing of coil 27 of relay 28 effects the opening of contact 29, thereby excluding any possibility of thermostatic regulation of the temperature by thermostat 12 and temperature limiter 13 and also switching off the supply of gas to burner 10.

Now examining Fig. 4, one can see the electric circuit of the fryer which here substantially comprises the same electric components as described above, although contact 29 can be closed on primary winding 35 of a high, low voltage transformer 36, whose secondary winding 37 is connected to inputs 38 and 39 of a conventional type electronic thermostat 40 containing thermostatic contact 30 connected, as above, to relative contacts 21 and 22 of microswitch 20, to contact 31 of temperature limiter 13 and to terminal block 32.

In its turn, electronic thermostat 40 can detect the temperature variations by means of a thermostatic sensor 41 consisting of a PTC or similar element introduced into the vessel and connected to two further inputs 42 and 43 of the thermostat, said sensor acting on thermostatic contact 30 to open or close it depending on the temperature measured. This circuit version of the inventive control device functions in the same way as the above version of Fig. 3, allowing the same goals and advantages to be obtained as described above.

## Claims

1. A control device for fryers that substantially comprise a vessel for holding the oil for frying the food, at least one heat exchanger disposed in contact with the walls of the vessel and consisting of pipes transporting the burned gas generated by a burner, or of an electric heating element, and also comprise at least one thermostat and one temperature limiter both disposed within the vessel in positions below the oil level and respectively adapted to select and to regulate within predetermined limits the oil heating temperature by switching on and off the supply of gas to said burner or of electric current to said heating element, characterized in that it comprises switch means (20) connected electrically to said thermostat (12) and said temperature limiter (13) and adapted to be actuated in accordance with the level of the oil in the vessel (6) in such a way as to effect the switch-off of said thermostat (12) and said temperature limiter (13) when the latter are no longer covered by oil, the oil level having dropped to or below a predetermined minimum limit.

2. The control device as in claim 1, characterized in that said switch means comprise at least one microswitch (20) supplied by the electric network in series with the coil (27) of at least one relay (28) acting on said microswitch (20) in such a way as to close or open it in accordance with the fill-up level or the predetermined minimum limit of the oil within said vessel (6), respectively.

FIG. 1

FIG. 2

Detail. B

Section. A-A

FIG. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | CH-A-486874 (ARO S.A.) <br> * the whole document * | 1, 2 | A47J37/12 |
| X | EP-A-95063 (YANE) <br> * page 5, line 27 - page 8, line 31; figures 1-3 * | 1, 2 | |
| A | DE-A-2027531 (KENTUCKY FRIED CHICKEN CORP.) <br> * page 24, line 24 - page 32, line 18; figures 4-7 * | 1, 2 | |
| A | US-A-3839951 (PALMASON) | | |

TECHNICAL FIELDS
SEARCHED (Int. Cl.4 )

A47J

The present search report has been drawn up for all claims

| Place of search | Date of completion of the search | Examiner |
|---|---|---|
| THE HAGUE | 31 JULY 1989 | MEINDERS H. |